# EUROPEAN PATENT APPLICATION

(11) **EP 1 953 443 A1**
(43) Date of publication of application: **06.08.2008**
(21) Application number: 06833127.1
(22) Date of filing: 22.11.2006
(51) Int. Cl.: F16L 41/02, F16L 55/00

(54) **PIPING**

(30) Priority: 24.11.2005 JP 2005338576
(71) Applicant: Mitsubishi Heavy Industries, Ltd., Tokyo 108-8215 (JP)
(72) Inventor: KONDO, Yoshiyuki, Takasago-shi Hyogo 676-8686 (JP); TANIMOTO, Koichi, Takasago-shi Hyogo 676-8686 (JP); SUZUKI, Shigeki, Kobe Hyogo 652-8585 (JP); TACHIBANA, Koji, Kobe Hyogo 652-8585 (JP)
(74) Representative: Bongiovanni, Simone
(86) International application number: PCT/JP2006/323305
(87) International publication number: WO 2007/060983

(57) **Abstract**

A pipe capable of eliminating the adverse influence of a cavity flow on a branch pipe is provided. In a pipe 1 which is branched from a main pipe 3 through which a high-temperature fluid flows and which is configured to be closable, dividing part 5, 7, and 9 are provided in the pipe 1 for dividing a channel in the pipe 1 into a plurality of small channels.

## Description

### Technical Field

The present invention relates to a pipe through which a fluid flows, and more particularly relates to a closed pipe branched from a main pipe through which a high-temperature fluid flows.

### Background Art

In general, various kinds of branch lines are connected to a main pipe, through which water flows, of power generation plants and other plants. Among these, there are pipes that are only used during plant startup or maintenance/inspection and are then closed by a gate valve provided in the branch line after the plant starts normal operation.

In the branch pipe closed by a gate valve or the like as described above, a so-called cavity flow, which is a spiral vortex flow induced by a water flow flowing through the main pipe, is formed. When heat radiation through a pipe wall of the closed branch pipe occurs in addition to the formation of the cavity flow, a thermal stratification interface is formed at a front end of the cavity flow. The thermal stratification interface is an interface where the temperature of water in the branch pipe rapidly changes, and hence, a large thermal stress is generated in a pipe located in the vicinity of the thermal stratification interface due to the temperature difference.

When such a thermal stratification interface stagnates at a predetermined position, such as a pipe bent portion of the branch pipe, thermal fatigue may be generated in the pipe in some cases. Hence, various techniques have been proposed to eliminate adverse influences, such as damage caused by thermal fatigue in the branch pipe, by controlling an intrusion depth of the cavity flow into the branch pipe (for example, see Patent Document 1).
Patent Document 1: Japanese Unexamined Patent Application, Publication No. 2002-98285 (pages 4 to 5, Fig. 4, etc.)

### Disclosure of Invention

In the above Patent Document 1, for example, a technique has been disclosed in which plate members formed in a cross shape are disposed in a branch line.
According to this technique, it is disclosed that intrusion into a branch pipe of the cavity flow occurring in the branch line is suppressed and that adverse influences on the pipe, such as thermal fatigue, can be eliminated.
However, according to the technique disclosed in Patent Document 1, since the cavity flow is not sufficiently controlled, a thermal stratification interface, which is a portion of the fluid exhibiting a rapid temperature change, may be generated at the above predetermined position of the pipe in some cases. As a result, thermal fatigue of the pipe occurs at the predetermined position due to the thermal stratification interface, and adverse influences on the pipe may result in some cases.

The present invention has been conceived in order to solve the problems described above, and an object of the present invention is to provide a pipe eliminating an adverse influence on a branch pipe caused by a cavity flow.

To this end, the present invention provides the following solutions.
In accordance with a first aspect of the present invention, there is provided a pipe which is branched from a main pipe through which a high-temperature fluid flows and which is configured to be closable, wherein dividing part for dividing a channel inside the pipe into a plurality of small channels is provided in the pipe.

According to the first aspect of the present invention, since the channel inside the pipe is divided into the plurality of small channels by the dividing part, channel resistance against a spiral flow is increased in a region where the dividing part is disposed. Hence, intrusion of the cavity flow, which is a spiral vortex, into the pipe can be suppressed by the dividing part, and a rapid temperature change portion is prevented from being formed at a predetermined portion of the pipe (such as a pipe bend). As a result, an adverse influence on the pipe caused by the rapid temperature change portion can be prevented.
In addition, since the plurality of small channels are formed, the heat radiation area of the fluid is increased, and the heat thereof can be easily radiated outside; hence, the rapid temperature change portion is less likely to be formed.

In the first aspect described above, the dividing part is preferably configured to include a first pipe connected to the main pipe, a second pipe separated from the first pipe, and a plurality of connection pipes connecting the first pipe and the second pipe so as to enable the fluid to flow therebetween.

According to this configuration, since the dividing part is formed by connecting the first pipe and the second pipe, which are separated from each other, by the plurality of connection pipes, the channel resistance against a circumferential component of the flow in the pipe is increased, and hence, intrusion of the cavity flow into the pipe is suppressed. In addition, the heat radiation area of the fluid in the plurality of connection pipes is increased, and hence the heat of the fluid can be easily radiated outside.

Also in the first aspect described above, it is preferable that the dividing part include a plurality of cylindrical members, provided in the pipe, each having a smaller diameter than that of the pipe, and that the plurality of cylindrical members be disposed side-by-side in a circumferential direction of the pipe.

According to this configuration, the plurality of cylindrical members, which collectively form the dividing part, are disposed side-by-side in the circumferential direction of the pipe, and hence the channel of the pipe can be divided into the plurality of small channels. Hence, the channel resistance against the circumferential component of the flow in the pipe is increased, and hence, intrusion of the cavity flow into the pipe can be suppressed.
In addition, since the plurality of cylindrical members are disposed side-by-side in the pipe in the circumferential direction, the rigidity of the pipe can be increased.
Furthermore, since existing pipes or the like are used for the cylindrical members, the pipe can be easily manufactured.

In the first aspect described above, it is preferable that the dividing part include a porous body having a plurality of penetrating holes, that the porous body be disposed inside the pipe, and that axial lines of the plurality of penetrating holes be along a central axis direction of the pipe.

According to this configuration, since the dividing part includes the porous body, the plurality of penetrating holes form a plurality of small channels. In addition, since the axial lines of the penetrating holes are disposed along the central axis direction of the pipe, the channel resistance against the circumferential component of the flow in the pipe is increased, and hence, intrusion of the cavity flow into the pipe is suppressed.

In accordance with a second aspect of the present invention, there is provided a pipe which is branched from a main pipe through which a high-temperature fluid flows and which is configured to be closable, wherein disturbing part for disturbing a vortex flow swirling in the pipe in a circumferential direction is provided in the pipe.

According to the second aspect of the present invention, since the vortex flow (in the spiral shape) swirling in the circumferential direction of the pipe is disturbed by the disturbing part, intrusion of a cavity flow, which is a spiral vortex, into the pipe is suppressed. Hence, the rapid temperature change portion is prevented from being formed at a predetermined position (such as a pipe bent portion) of the pipe, and as a result, an adverse influence on the pipe caused by the rapid temperature change portion can be prevented.

In the second aspect described above, it is preferable that the disturbing part include a first spiral member twisted in one rotary direction and a second spiral member twisted in another rotary direction, and that the first spiral member and the second spiral member be disposed in the pipe.

According to this configuration, since the disturbing part includes the first spiral member and the second spiral member, which are twisted in the directions opposite to each other, intrusion of the cavity flow, which is a spiral vortex in the pipe, into the pipe can be suppressed.
For example, a cavity flow swirling in said one rotary direction is suppressed by the second spiral member twisted in said another rotary direction, and a cavity flow swirling in said another rotary direction is suppressed by the first spiral member twisted in said one rotary direction. Hence, regardless of whether the swirling direction of the cavity flow is said one rotary direction or said another rotary direction, the cavity flow can be suppressed by the disturbing part.

In the above second aspect, the disturbing part is preferably configured to include a channel resistance portion increasing channel resistance against a central axis direction flow in the pipe.

According to this configuration, since the disturbing part includes the channel resistance portion increasing the channel resistance against the central axis direction flow in the pipe, intrusion of the cavity flow, which is a spiral vortex, into the pipe can be suppressed.

In the above second aspect, it is preferable that the disturbing part include a plate member extending in a central axis direction of the pipe, and that the plate member protrude inside and outside the pipe.

According to this configuration, since the plate member extends in the central axis direction of the pipe and protrudes inside the pipe, intrusion of the cavity flow, which is a spiral vortex, into the pipe can be suppressed.
Since the plate member protrudes outside the pipe, the heat of the fluid can be efficiently radiated outside.

In accordance with a third aspect of the present invention, there is provided a pipe which is branched from a main pipe through which a high-temperature fluid flows and which is configured to be closable, wherein a cylindrical member is provided in the pipe, and the cylindrical member is disposed in a region of the pipe where a rapid temperature change portion of the fluid is formed.

According to the third aspect of the present invention, since the cylindrical member is disposed in the pipe, a cavity flow, which is a spiral vortex, intrudes into the cylindrical member. Hence, the rapid temperature change portion is formed in the cylindrical member, and as a result, the cylindrical member is thermally deformed. In addition, because the pipe is isolated from the rapid temperature change portion by the cylindrical member, and thermal fatigue formed by the rapid temperature change portion is reduced. Accordingly, an adverse influence on the pipe caused by the rapid temperature change portion can be prevented.
In addition, since the thermal stress generated is reduced, the thickness of the cylindrical member is preferably decreased.

In the above third aspect, it is preferable that a concave portion or a convex portion spirally extending on the inner surface of the cylindrical member be provided.

According to this configuration, the concave portion or the convex portion spirally extending on the inner surface of the cylindrical member is formed, and hence the formation of the rapid temperature change portion can be disturbed. That is, turbulence of a low-temperature fluid flowing toward the main pipe is promoted by the concave portion or the convex portion of the cylindrical member. In addition, turbulence of a high-temperature fluid flowing from the main pipe to an opposite side thereto is promoted by the concave portion or the convex portion of the cylindrical member. Hence, stirring of the low-temperature fluid and the high-temperature fluid is facilitated, and as a result, the formation of the rapid temperature change portion is disturbed.

In accordance with a fourth aspect of the present invention, there is provided a pipe which is branched from a main pipe through which a high-temperature fluid flows and which is configured to be closable, wherein in a region of the pipe where a rapid temperature change portion of the fluid is formed, an extendible portion which is extendible in a central axis direction of the pipe is provided.

According to the fourth aspect of the present invention, since the extendible portion is formed in the region of the pipe where the rapid temperature change portion is formed, thermal deformation caused by the difference in temperature of the rapid temperature change portion is absorbed in the extendible portion. Hence, the generation of thermal fatigue in the pipe can be prevented, and an adverse influence on the pipe can be prevented.

In the above fourth embodiment, it is preferable that the extendible portion include an accordion portion having a concave and a convex part in the radial direction of the pipe, and that the distance between the concave and convex parts along the central axis direction of the pipe be determined in accordance with fluctuation in position where the rapid temperature change portion is formed.

According to this configuration, since the extendible portion is the accordion portion having the concave and the convex parts in the radial direction of the pipe, thermal stress caused by the difference in temperature of the rapid temperature change portion is absorbed in the accordion portion, and hence, the generation of thermal fatigue in the pipe can be reduced. In addition, since the distance between the concave and the convex parts along the central axis direction of the pipe is determined in accordance with the fluctuation in position where the rapid temperature change portion is formed, even when the position where the rapid temperature change portion is formed fluctuates, the generation of thermal fatigue in the pipe can be prevented.

According to the pipe of the present invention, since the channel of the pipe is divided into the plurality of small channels by the dividing part, in the region where the dividing part is disposed, the channel resistance against the spiral flow is increased. Hence, intrusion of the cavity flow, which is a spiral vortex, into the pipe can be prevented by the dividing part, and as a result, the rapid temperature change portion is prevented from being formed at a predetermined position (such as a pipe bent portion) of the pipe. As a result, an advantage is afforded in that an adverse influence on the pipe caused by the rapid temperature change portion can be prevented.

### Brief Description of Drawings

[FIG. 1] Fig. 1 is a schematic view illustrating the structure of a branch pipe according to a first embodiment of the present invention.
[FIG. 2] Fig. 2 is a cross-sectional view of the branch pipe shown in Fig. 1 taken along the line A-A.
[FIG. 3] Fig. 3 is a schematic view illustrating the structure of a branch pipe according to a second embodiment of the present invention.
[FIG. 4] Fig. 4 is a schematic view illustrating the structure of a branch pipe according to a third embodiment of the present invention.
[FIG. 5] Fig. 5 is a schematic view illustrating the structure of a branch pipe according to a fourth embodiment of the present invention.
[FIG. 6] Fig. 6 is a cross-sectional view of the branch pipe shown in Fig. 5 taken along the line B-B.
[FIG. 7] Fig. 7 is a schematic view illustrating the structure of a branch pipe according to a fifth embodiment of the present invention.
[FIG. 8] Fig. 8 is a cross-sectional view of the branch pipe shown in Fig. 7 taken along the line D-D.
[FIG. 9] Fig. 9 is a schematic view illustrating the structure of a branch pipe according to a sixth embodiment of the present invention.
[FIG. 10] Fig. 10 is a schematic view illustrating the structure of a branch pipe according to a seventh embodiment of the present invention.
[FIG. 11] Fig. 11 is a schematic view illustrating the structure of a branch pipe according to an eighth embodiment of the present invention.
[FIG. 12] Fig. 12 is a schematic view illustrating the structure of a branch pipe according to a ninth embodiment of the present invention.
[FIG. 13] Fig. 13 is a schematic view illustrating the structure of a branch pipe according to a tenth embodiment of the present invention.

### Explanation of Reference Signs:

1, 51, 101, 151, 201, 251, 301, 351, 401, 451: branch pipe (pipe)
3: main pipe
5: first pipe (dividing part)
7: second pipe (dividing part)
9: connection pipe (dividing part)
55: first spiral vane (first swirling member, disturbing part)
57: second spiral vane (second swirling member, disturbing part)
105: labyrinth-structured portion (channel resistance portion, disturbing part)
155: fin (plate member)
205: cylindrical member (dividing part)
255: inner cylinder (cylindrical member)
305: inner cylinder (cylindrical member)
307: concave portion
355: accordion portion (extendible portion)
405: honeycomb portion (porous body)
407, 457: penetrating hole
455: porous plate

### Best Mode for Carrying Out the Invention

### First Embodiment

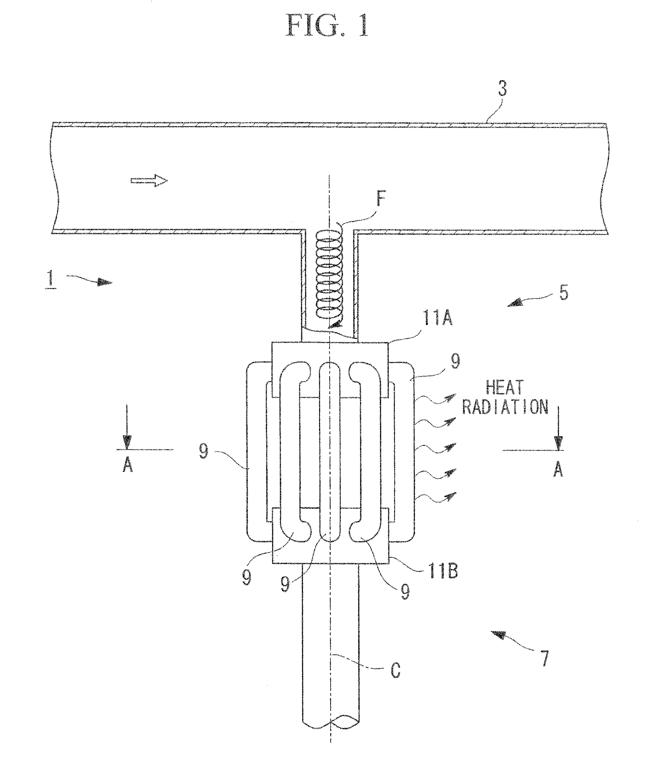

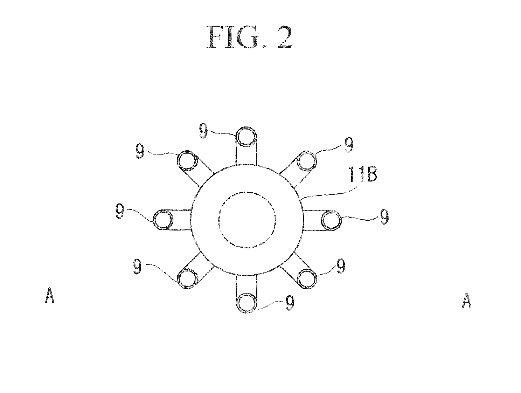

Hereinafter, a branch pipe according to a first embodiment of the present invention will be described with reference to Figs. 1 and 2.
Fig. 1 is a schematic view illustrating the structure of the branch pipe of this embodiment.
A branch pipe (pipe) 1 is a pipe branched from a main pipe 3 through which high-temperature water flows, as shown in Fig. 1.
The branch pipe 1 has a first pipe (dividing part) 5 connected to the main pipe 3, a second pipe (dividing part) 7 separated from the first pipe 5, and connection pipes (dividing part) 9 which are a plurality of small pipes connecting the first pipe 5 and the second pipe 7.

At an end portion of the first pipe 5 at the second pipe 7 side (lower side in Fig. 1), a connection portion 11A having a diameter larger than that of the other portion is formed. The connection pipes 9 are connected to a circumferential surface of the connection portion 11A. At an end portion of the second pipe 7 at the first pipe 5 side (upper side in Fig. 1), a connection portion 11B having a diameter larger than that of the other portion is formed. The connection pipes 9 are connected to a circumferential surface of the connection portion 11B.
In addition, the connection portions 11A and 11B may be formed in the first and second pipes 5 and 7, as described above, or they may not be formed at all; that is, the configuration is not particularly limited.

Fig. 2 is a cross-sectional view of the branch pipe shown in Fig. 1 taken along the line A-A.
The connection pipes 9 are pipes that are narrower than the diameters of the first and second pipes 5 and 7 and are disposed side-by-side at regular intervals around a circle centered at a central axis C of the branch pipe 1.
Ends of the connection pipes 9 are each bent inward in the radial direction toward the circumferential surface of the connection portion 11B and are connected to the connection portion 11B, as shown in Fig. 2. The ends at the connection portion 11A side are configured similarly. In addition, central portions of the connection pipes 9 are disposed approximately parallel to the central axis C, as shown in Fig. 1.
In addition, the shape of each connection pipe 9 is not limited to that in which only the ends are bent, as described above; various shapes may be used.

Next, the effect of the branch pipe 1 having the above structure will be described with reference to Fig. 1.
When high-temperature water flows through the main pipe 3 while the branch pipe 1 is closed, a cavity flow F, which is a spiral vortex swirling around the central axis C, is formed in the first pipe 5, as shown in Fig. 1. While the cavity flow F spirally swirls, it intrudes into the first pipe 5 toward the second pipe 7 side (lower side in Fig. 1) and further intrudes into the connection portion 11A.
The cavity flow F intruding into the connection portion 11A is attenuated due to an increase in channel resistance against a circumferential component of the flow by the connection pipes 9. In addition, high-temperature water intruding into the branch pipe 1 from the main pipe 3 as the cavity flow F radiates its heat to the connection pipes 9, and hence the temperature is decreased.

Next, the case in which the closed state of the branch pipe 1 is released, for example, the case in which water flows from the main pipe 3 into the branch pipe 1, will be described.
The water flowing into the first pipe 5 from the main pipe 3 flows into the connection portion 11A toward the second pipe 7 side. The water flows from the connection portion 11A into the connection portion 11B through the connection pipes 9 and then flows into the second pipe 7. The water flowing into the second pipe 7 is lead, for example, to a water-quality inspection portion.

According to the above structure, since the first pipe 5 and the second pipe 7, which are separated from each other, are connected with the plurality of connection pipes 9, the channel resistance of the branch pipe 1 against the cavity flow F is increased, and hence the intrusion of the cavity flow F into the branch pipe 1 can be stopped at the position at which the connection pipes 9 are located. Hence, a thermal stratification interface (rapid temperature change portion) can be prevented from being formed in a predetermined portion (such as a pipe bent portion) of the branch pipe 1, and as a result, an adverse influence on the branch pipe 1 due to the thermal stratification interface can be prevented.
In addition, since a heat radiation area of the water is increased in the plurality of connection pipes 9, the water temperature can be decreased, and hence the thermal stratification interface is less likely to be formed.

### Second Embodiment

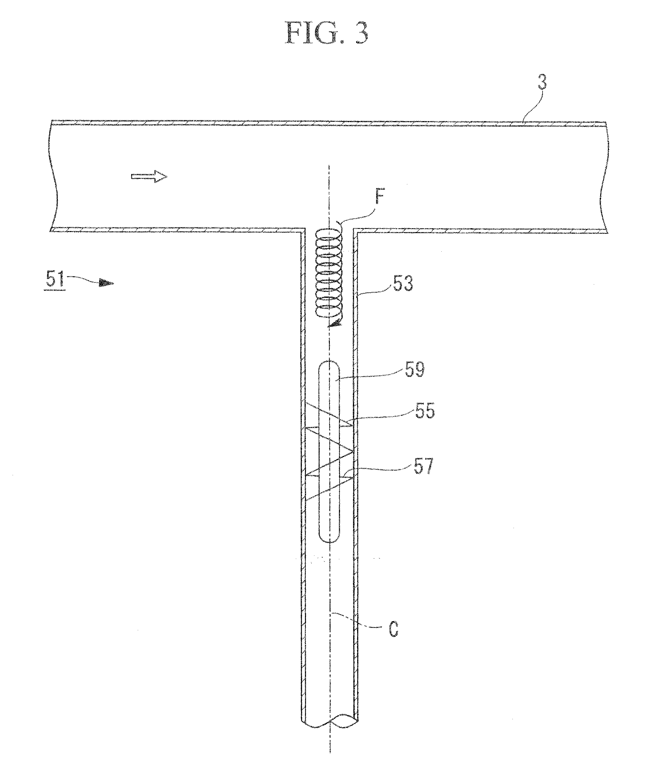

Next, a second embodiment of the present invention will be described with reference to Fig. 3.
Fig. 3 is a schematic view illustrating the structure of a branch pipe of this embodiment.
In this embodiment, the same constituent elements as those in the first embodiment are designated by the same reference numerals, and a description thereof is omitted.
A branch pipe (pipe) 51 is a pipe branched from a main pipe 3 through which high-temperature water flows, as shown in Fig. 3.
The branch pipe 51 has a pipe 53 connected to the main pipe 3, a first swirling vane (first spiral member, disturbing part) 55 disposed in the pipe 53, a second swirling vane (second spiral member, disturbing part) 57, and a support member 59 supporting the first and the second swirling vanes 55 and 57.

The first swirling vane 55 is a spiral-shaped vane twisted in one swirling direction (for example, clockwise in the direction away from the main pipe 3). The second swirling vane 57 is a spiral-shaped vane twisted in another swirling direction (for example, anticlockwise in the direction away from the main pipe 3). The first swirling vane 55 and the second swirling vane 57 are disposed in series along a central axis C.
The support member 59 is a member formed to have a bar shape and is fixed to the pipe 53. In addition, the first swirling vane 55 and the second swirling vane 57 are provided on the support member 59 and are supported thereby.

Next, the effect of the branch pipe 51 having the above structure will be described with reference to Fig. 3.
When high-temperature water flows through the main pipe 3 while the branch pipe 51 is closed, a cavity flow F, which is a spiral vortex swirling around the central axis C, is formed in the pipe 53, as shown in Fig. 3. While the cavity flow F spirally swirls, it intrudes into the pipe 53 in the direction away from the main pipe 3 (downward in Fig. 3) and reaches the first and the second swirling vanes 55 and 57.

In the case in which the cavity flow F is a spiral vortex swirling anticlockwise in the direction away from the main pipe 3, the cavity flow F is disturbed by the first swirling vane 55. Hence, the cavity flow F is attenuated by the first swirling vane 55. On the other hand, in the case in which the cavity flow F is a spiral vortex swirling clockwise in the direction away from the main pipe 3, the cavity flow F is disturbed by the second swirling vane 57. Hence, the cavity flow F is attenuated by the second swirling vane 57.
The swirling direction of the cavity flow F is not stable and always varies between clockwise swirling and anticlockwise swirling, and clockwise swirling and anticlockwise swirling cavity flows F may be present at the same time in some cases.

According to the structure described above, since the first swirling vane 55 and the second swirling vane 57, which are twisted in directions opposite to each other, are provided in the pipe 53, the cavity flow F, which is a spiral vortex, is suppressed from intruding into the pipe 53.
In particular, the clockwise swirling cavity flow F is attenuated by the second swirling vane 57 twisted in the anticlockwise direction, and the anticlockwise swirling cavity flow F is attenuated by the first swirling vane 55 twisted in the clockwise direction. Hence, regardless of whether the swirling direction of the cavity flow F is clockwise or anticlockwise, the cavity flow F can be attenuated by the first and the second swirling vanes 55 and 57. Hence, a thermal stratification interface (rapid temperature change portion) can be prevented from being formed in a predetermined portion (such as a pipe bent portion) of the branch pipe 51, and as a result, an adverse influence on the branch pipe 51 due to the thermal stratification interface can be prevented.

### Third Embodiment

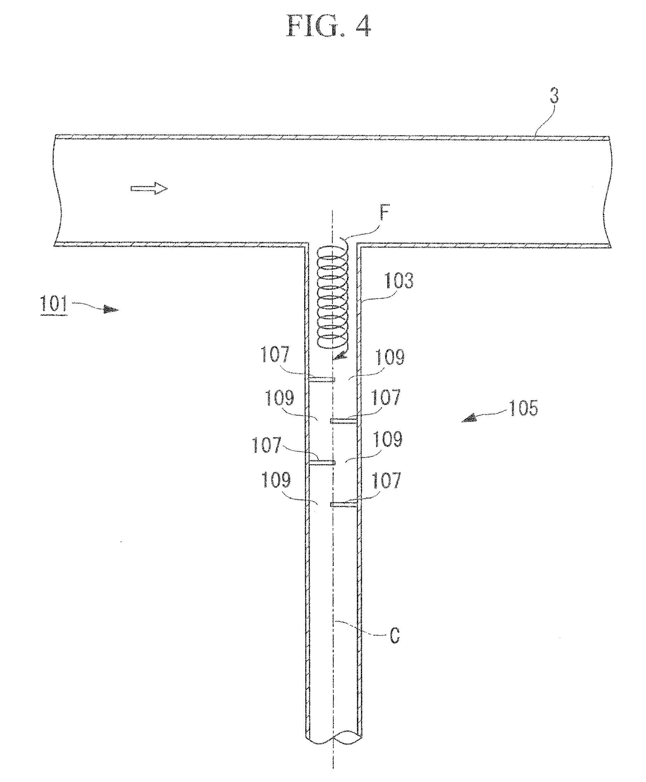

Next, a third embodiment of the present invention will be described with reference to Fig. 4.
Fig. 4 is a schematic view illustrating the structure of a branch pipe of this embodiment.
In this embodiment, the same constituent elements as those in the first embodiment are designated by the same reference numerals, and a description thereof is omitted.
A branch pipe (pipe) 101 is a pipe branched from a main pipe 3 through which high-temperature water flows, as shown in Fig. 4.
The branch pipe 101 has a pipe 103 connected to the main pipe 3, and a labyrinth-structured portion (channel resistance portion, disturbing part) 105 disposed in the pipe 103.

The labyrinth-structured portion 105 has a plurality of plate members 107 extending from the inner wall of the pipe 103 inward in the radial direction. The plurality of plate members 107 block part of the channel of the pipe 103 and cause water to flow through remaining open portions 109.
In addition, the plate members 107 are disposed side-by-side in a central axis C direction, and adjacent open portions 109 are disposed opposite each other with the central axis C interposed therebetween. That is, the plate members 107 are disposed so that the open portions 109 are disposed in a staggered manner.

Next, the effect of the branch pipe 101 having the above structure will be described with reference to Fig. 4.
When the high-temperature water flows through the main pipe 3 while the branch pipe 101 is closed, a cavity flow F, which is a spiral vortex swirling around a central axis C, is generated in the pipe 103, as shown in Fig. 4. While the cavity flow F spirally swirls, it intrudes into the pipe 103 in a direction away from the main pipe 3 (downward in Fig. 4) and reaches the labyrinth-structured portion 105.

In the labyrinth-structured portion 105, the water flows meanderingly through the open portions 109 disposed in a staggered manner, and hence the channel resistance is increased. Accordingly, intrusion of the cavity flow F is suppressed by the labyrinth-structured portion 105, and as a result, the cavity flow F is attenuated.

According to the structure described above, since the labyrinth-structured portion 105, which increases the channel resistance against the flow in the central axis C direction, is provided in the pipe 103, intrusion of the cavity flow F into the pipe 103 is suppressed, and hence the cavity flow F can be attenuated.

### Fourth Embodiment

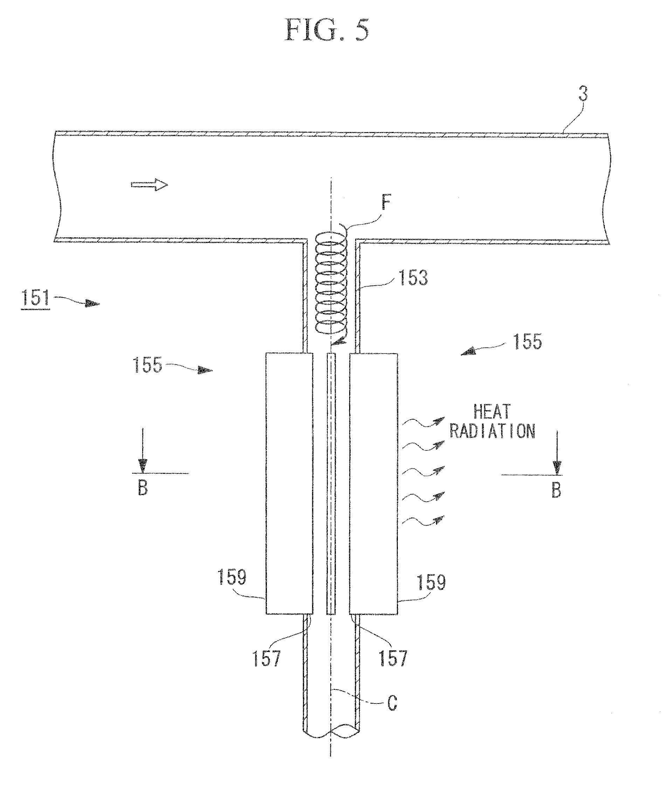

Next, a fourth embodiment of the present invention will be described with reference to Fig. 5.
Fig. 5 is a schematic view illustrating the structure of a branch pipe of this embodiment.
In this embodiment, the same constituent elements as those in the first embodiment are designated by the same reference numerals, and a description thereof is omitted.
A branch pipe (pipe) 151 is a pipe branched from a main pipe 3 through which high-temperature water flows, as shown in Fig. 5.
The branch pipe 151 has a pipe 153 connected to the main pipe 3, and fins (plate members) 155 provided in the pipe 153.

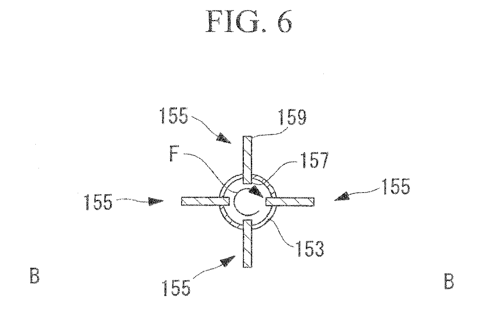

Fig. 6 is a cross-sectional view of the branch pipe shown in Fig. 5 taken along the line B-B.
The fins 155 are plate members extending in a central axis C direction and also in a radial direction of the pipe 153. In addition, the fins 155 are disposed to penetrate a circumferential surface of the pipe 153, an inner edge portion 157 at the central axis C side is located inside the pipe 153, and an outer edge portion 159, provided on the opposite side of the central axis C of the fins 155, is located outside of the pipe 153.
In this embodiment, the number of fins 155 is four, as shown in Fig. 6, and they are provided in the pipe 153 at an angular interval of approximately 90°.
In addition, the number of fins 155 may be four, as described above, or any other number and is not particularly limited.

Next, the effect of the branch pipe 151 having the above structure will be described with reference to Figs. 5 and 6.
When high-temperature water flows through the main pipe 3 while the branch pipe 151 is closed, a cavity flow F, which is a spiral vortex swirling around the central axis C, is generated in the pipe 153, as shown in Fig. 5. While the cavity flow F spirally swirls, it intrudes into the pipe 153 in a direction away from the main pipe 3 (downward in Fig. 5) and reaches a region where the fins 155 are disposed.

A circumferential component of the cavity flow F is prevented from flowing by the inner edge portions 157 of the fins 155, as shown in Fig. 6. Hence, the cavity flow F is attenuated in the region where the fins 155 are disposed.
In addition, after the heat of the water forming the cavity flow F is transmitted to the inner edge portions 157 in contact with the water, the heat is further transmitted to the outer edge portions 159 from the inner edge portions 157 and is then radiated therefrom.

According to the structure described above, since the fins 155 extend in the central axis C direction and also have the inner edge portions 157 protruding inside the pipe 153, the cavity flow F, which is a spiral vortex, is blocked by the inner edge portions 157, and as a result, intrusion of the cavity flow F into the pipe 153 is prevented.
Since the outer edge portions 159 of the fins 155 protrude outside the pipe 153, the heat of the water can be efficiently radiated outside, and hence the formation of a thermal stratification interface can be prevented.

### Fifth Embodiment

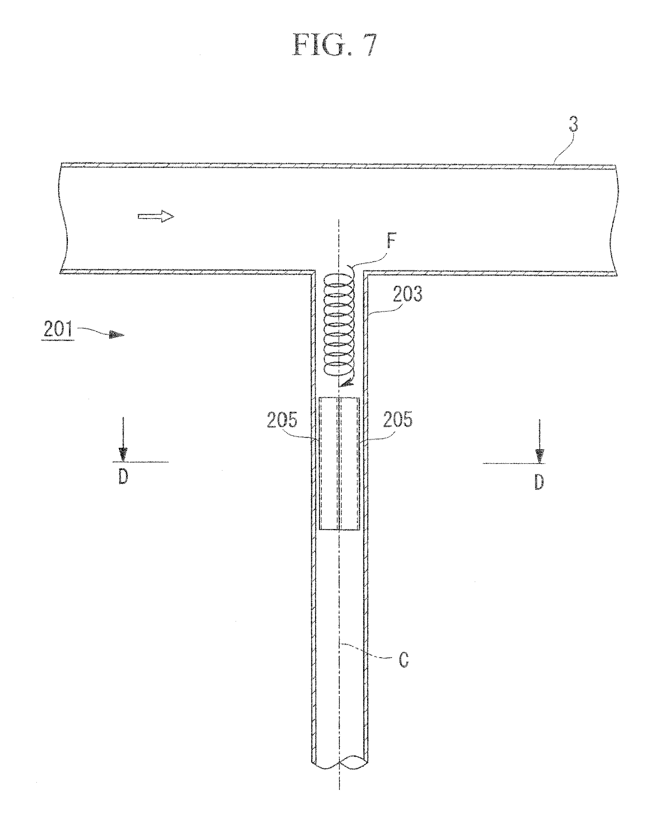

Next, a fifth embodiment of the present invention will be described with reference to Fig. 7.
Fig. 7 is a schematic view illustrating the structure of a branch pipe of this embodiment.
In this embodiment, the same constituent elements as those in the first embodiment are designated by the same reference numerals, and a description thereof is omitted.
A branch pipe (pipe) 201 is a pipe branched from a main pipe 3 through which high-temperature water flows, as shown in Fig. 7.
The branch pipe 201 has a pipe 203 connected to the main pipe 3, and cylindrical members (dividing part) 205 provided in the pipe 203.

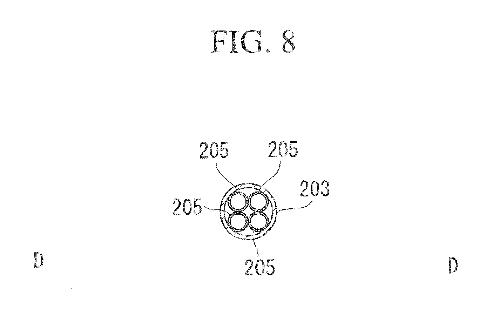

Fig. 8 is a cross-sectional view of the branch pipe shown in Fig. 7 taken along the line D-D.
The cylindrical members 205 are each formed of a pipe having a diameter smaller than that of the pipe 203, as shown in Fig. 8. In this embodiment, four cylindrical members 205 are disposed side-by-side in the pipe 203 in the circumferential direction.

Next, the effect of the branch pipe 201 having the above structure will be described with reference to Figs. 7 and 8.
When high-temperature water flows through the main pipe 3 while the branch pipe 201 is closed, a cavity flow F, which is a spiral vortex swirling around a central axis C, is generated in the pipe 203, as shown in Fig. 7. While the cavity flow F swirls, it intrudes into the pipe 203 in a direction away from the main pipe 3 (downward in Fig. 7) and reaches a region where the cylindrical members 205 are disposed.
The cavity flow F is attenuated due to an increase in channel resistance against a circumferential component of the flow by the cylindrical members 205, as shown in Fig. 8. Hence, the cavity flow F is attenuated in the region where the cylindrical members 205 are disposed.

According to the structure described above, since the four cylindrical members 205 are disposed in the pipe 203 side-by-side in the circumferential direction thereof, the channel of the pipe 203 is divided into a plurality of small channels. Hence, the channel resistance in the pipe 203 against the circumferential component of the flow is increased, and as a result, intrusion of the cavity flow F into the pipe 203 can be suppressed.
In addition, since the four cylindrical members 205 are disposed in the pipe 203 side-by-side in the circumferential direction, the rigidity of the pipe 203 can be increased. Furthermore, since existing pipes and the like can be used for the cylindrical members 205, the branch pipe 201 can be easily manufactured.

### Sixth Embodiment

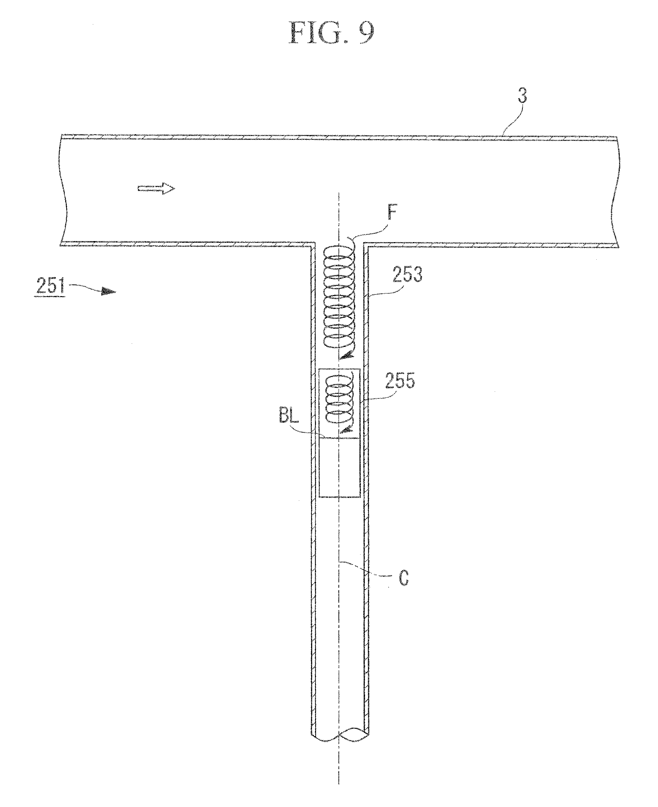

Next, a sixth embodiment of the present invention will be described with reference to Fig. 9.
Fig. 9 is a schematic view illustrating the structure of a branch pipe of this embodiment.
In this embodiment, the same constituent elements as those in the first embodiment are designated by the same reference numerals, and a description thereof is omitted.
A branch pipe (pipe) 251 is a pipe branched from a main pipe 3 through which high-temperature water flows, as shown in Fig. 9.
The branch pipe 251 has a pipe 253 connected to the main pipe 3, and one inner cylinder (cylindrical member) 255 provided in the pipe 253.

The inner cylinder 255 is formed of a pipe having a diameter smaller than that of the pipe 253 and is supported thereby. The inner cylinder 255 is disposed at a front end of a cavity flow F, that is, at a position where a thermal stratification interface BL is formed.
In addition, the thickness of the inner cylinder 255 is preferably decreased in order to reduce the thermal stress applied to the inner cylinder 255.

Next, the effect of the branch pipe 251 having the above structure will be described with reference to Fig. 9.
When high-temperature water flows through the main pipe 3 while the branch pipe 251 is closed, the cavity flow F, which is a spiral vortex swirling around a central axis C, is generated in the pipe 253, as shown in Fig. 9. While the cavity flow F spirally swirls, it intrudes into the pipe 253 in a direction away from the main pipe 3 (downward in Fig. 9) and reaches the inner cylinder 255.
The cavity flow F intrudes into the inner cylinder 255 and forms a thermal stratification interface therein. On the other hand, the cavity flow F does not intrude between the inner cylinder 255 and the pipe 253, and hence the pipe 253 is not in contact with the thermal stratification interface BL.

According to the structure described above, since the inner cylinder 255 is disposed in the pipe 253, the cavity flow F, which is a spiral vortex, intrudes into the inner cylinder 255. Hence, the thermal stratification interface BL, which is a rapid temperature change portion, is formed in the inner cylinder 255, and hence the inner cylinder 255 is deformed by heat. On the other hand, since the pipe 253 is separated from the thermal stratification interface BL by the inner cylinder 255, thermal fatigue formed in the pipe 253 by a rapid change in temperature is reduced. As a result, an adverse influence on the pipe 253 due to the thermal stratification interface BL can be prevented.

### Seventh Embodiment

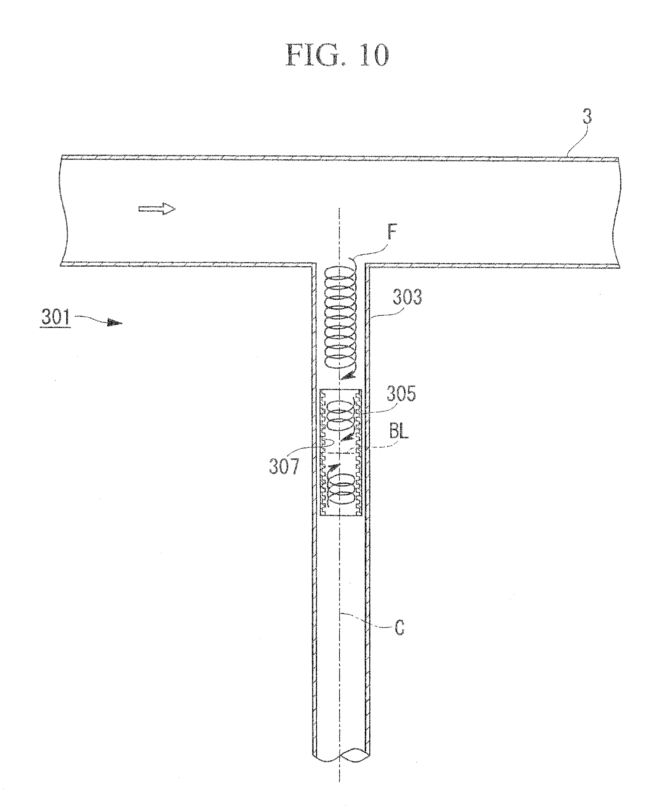

Next, a seventh embodiment of the present invention will be described with reference to Fig. 10.
Fig. 10 is a schematic view illustrating the structure of a branch pipe of this embodiment.
In this embodiment, the same constituent elements as those in the first embodiment are designated by the same reference numerals, and a description thereof is omitted.
A branch pipe (pipe) 301 is a pipe branched from a main pipe 3 through which high-temperature water flows, as shown in Fig. 10.
The branch pipe 301 has a pipe 303 connected to the main pipe 3, and one inner cylinder (cylindrical member) 305 provided in the pipe 303.

The inner cylinder 305 is formed of a pipe having a diameter smaller than that of the pipe 303 and has a spirally extending concave portion 307 in the inner surface. In addition, the inner cylinder 305 is supported by the pipe 303 and is disposed at a front end of a cavity flow F, that is, at a position where a thermal stratification interface BL is formed.
In addition, the spirally extending concave portion 307 may be formed in the inner surface of the inner cylinder 305, as described above, or a spirally extended convex portion may be formed; hence, the inside structure of the inner cylinder 305 is not particularly limited.

Next, the effect of the branch pipe 301 having the above structure will be described with reference to Fig. 10.
When high-temperature water flows through the main pipe 3 while the branch pipe 301 is closed, the cavity flow F, which is a spiral vortex swirling around a central axis C, is generated in the pipe 303, as shown in Fig. 10. While the cavity flow F spirally swirls, it intrudes into the pipe 303 in a direction away from the main pipe 3 (downward in Fig. 10) and reaches the inner cylinder 305.
The cavity flow F intrudes inside the inner cylinder 305 and is mixed with low-temperature water in the inner cylinder 305.

According to the structure described above, since the spirally extending concave portion 307 is formed in the inner surface of the inner cylinder 305, the thermal stratification interface BL, which is a rapid temperature change portion, is prevented from being formed. That is, the generation of turbulence of the low-temperature water in the inner cylinder 305 flowing toward the main pipe 3 (from lower side to upper side in Fig. 10) is facilitated by the concave portion 307. In addition, the generation of high-temperature water in the inner cylinder 305 flowing from the main pipe 3 toward a side opposite thereto (from upper side to lower side in Fig. 10) is also facilitated by the concave portion 307. Hence, stirring and mixing of the low-temperature water and the high-temperature water are facilitated by the concave portion 307, and hence the formation of the thermal stratification interface BL is disturbed.

### Eighth Embodiment

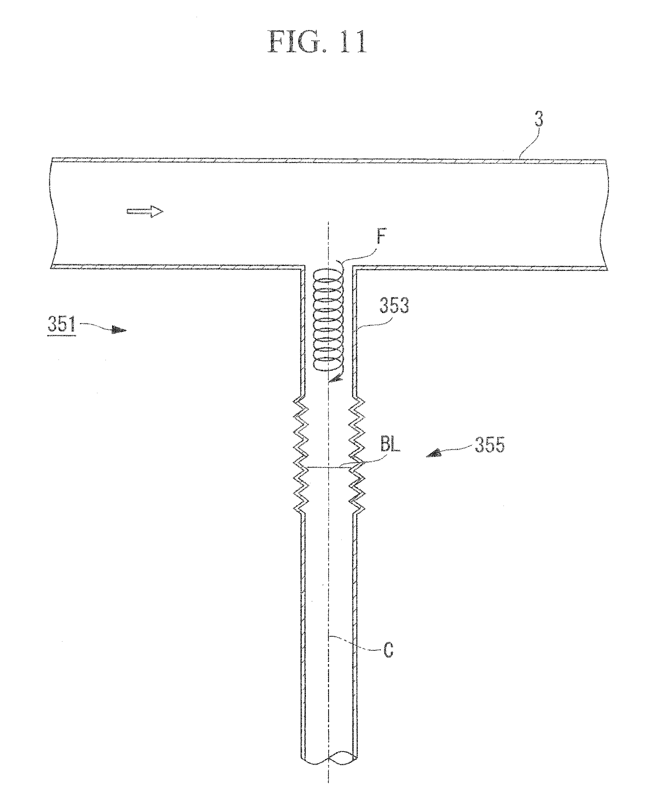

Next, an eighth embodiment of the present invention will be described with reference to Fig. 11.
Fig. 11 is a schematic view illustrating the structure of a branch pipe of this embodiment.
In this embodiment, the same constituent elements as those in the first embodiment are designated by the same reference numerals, and a description thereof is omitted.
A branch pipe (pipe) 351 is a pipe branched from a main pipe 3 through which high-temperature water flows, as shown in Fig. 11.
The branch pipe 351 has a pipe 353 connected to the main pipe 3, and an accordion portion (extendible portion) 355 provided in the pipe 353.

The accordion portion 355 formed in an inner surface of the pipe 353 is a concave-convex portion folded in the radial direction and is formed at a front end of a cavity flow F, that is, at a position where a thermal stratification interface BL is formed.
The pitch between a concave and a convex part of the accordion portion 355 is formed larger than the fluctuation in position where the thermal stratification interface BL is formed.

Next, the effect of the branch pipe 351 having the above structure will be described with reference to Fig. 11.
When high-temperature water flows through the main pipe 3 while the branch pipe 351 is closed, the cavity flow F, which is a spiral vortex swirling around a central axis C, is generated in the pipe 353, as shown in Fig. 11. While the cavity flow F spirally swirls, it intrudes into the pipe 353 in a direction away from the main pipe 3 (downward in Fig. 11) and reaches the accordion portion 355. The cavity flow F forms the thermal stratification interface BL at the accordion portion 355.
The accordion portion 355 is thermally deformed according to the temperature of the water in contact therewith, and the folded concave-convex portion is extended, so that the thermal deformation is absorbed.

According to the structure described above, since the accordion portion 355 is formed in the region in which the thermal stratification interface BL is formed, thermal stress caused by the difference in temperature of the thermal stratification interface BL is absorbed in the accordion portion, and hence the generation of thermal fatigue in the pipe 353 can be reduced.
In addition, since the pitch (distance) between the concave and convex parts along the central axis C direction of the pipe 353 is formed larger than the fluctuation in position where the thermal stratification interface BL is formed, even when the position where the thermal stratification interface BL is formed fluctuates, the generation of thermal fatigue in the pipe can be prevented.

### Ninth Embodiment

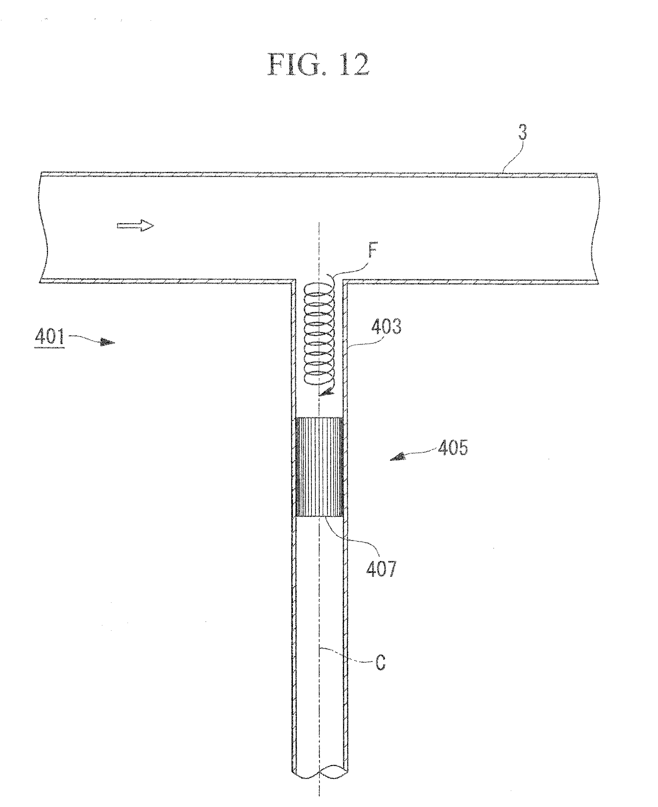

Next, a ninth embodiment of the present invention will be described with reference to Fig. 12.
Fig. 12 is a schematic view illustrating the structure of a branch pipe of this embodiment.
In this embodiment, the same constituent elements as those in the first embodiment are designated by the same reference numerals, and a description thereof is omitted.
A branch pipe (pipe) 401 is a pipe branched from a main pipe 3 through which high-temperature water flows, as shown in Fig. 12.
The branch pipe 401 has a pipe 403 connected to the main pipe 3, and a honeycomb member (porous body) 405 provided in the pipe 403.
The honeycomb member 405 has a so-called honeycomb structure in which a plurality of penetrating holes 407 each having a polygonal cross-section are formed. In addition, in the honeycomb member 405, central axes of the penetrating holes 407 are disposed substantially parallel to a central axis C.

Next, the effect of the branch pipe 401 having the above structure will be described with reference to Fig. 12.
When high-temperature water flows through the main pipe 3 while the branch pipe 401 is closed, a cavity flow F, which is a spiral vortex swirling around the central axis C, is generated in the pipe 403, as shown in Fig. 12. While the cavity flow F spirally swirls, it intrudes into the pipe 403 in a direction away from the main pipe 3 (downward in Fig. 12) and reaches the honeycomb member 405.
When passing through the penetrating holes 407 of the honeycomb member 405, the cavity flow F is attenuated by an increase in channel resistance against a circumferential component of the flow due to the honeycomb member 405. Hence, in the region in which the honeycomb member 405 is disposed, the cavity flow F is attenuated.

According to the structure described above, since the honeycomb member 405 is disposed in the pipe 403, and the central axes of the penetrating holes 407 are disposed along the central axis C, the channel resistance against the circumferential component of the flow in the pipe 403 is increased. Hence, the cavity flow F is attenuated in the region in which the honeycomb member 405 is disposed and is prevented from intruding into the pipe 403.

### Tenth Embodiment

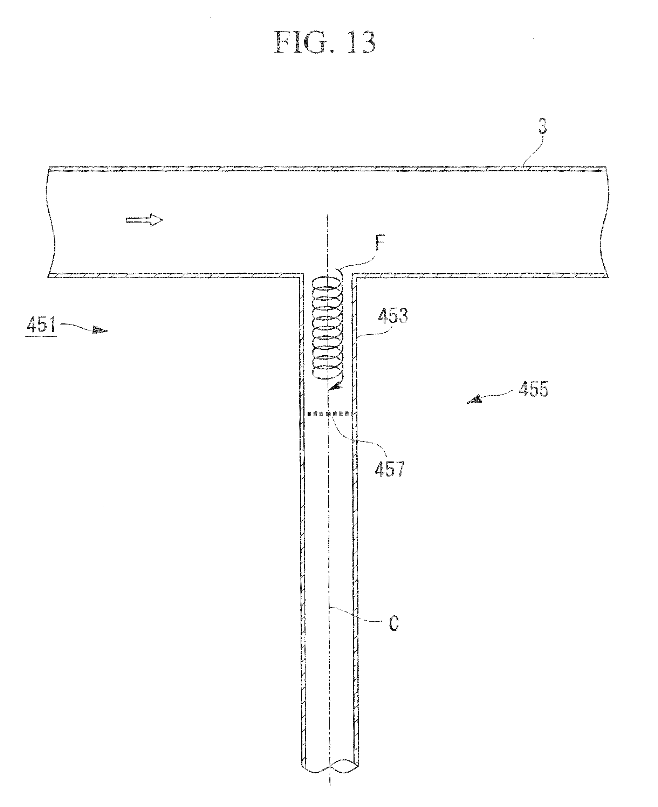

Next, a tenth embodiment of the present invention will be described with reference to Fig. 13.
Fig. 13 is a schematic view illustrating the structure of a branch pipe of this embodiment.
In this embodiment, the same constituent elements as those in the first embodiment are designated by the same reference numerals, and a description thereof is omitted.
A branch pipe (pipe) 451 is a pipe branched from a main pipe 3 through which high-temperature water flows, as shown in Fig. 13.
The branch pipe 451 has a pipe 453 connected to the main pipe 3, and a porous plate (porous body) 455 provided in the pipe 453. The porous plate 455 is a plate member in which a plurality of penetrating holes 457 are formed.

Next, the effect of the branch pipe 451 having the above structure will be described with reference to Fig. 13.
When high-temperature water flows through the main pipe 3 while the branch pipe 451 is closed, a cavity flow F, which is a spiral vortex swirling around a central axis C, is generated in the pipe 453, as shown in Fig. 13. While the cavity flow F spirally swirls, it intrudes into the pipe 453 in a direction away from the main pipe 3 (downward in Fig. 13) and reaches the porous plate 455.
When passing through the penetrating holes 457 of the porous plate 455, the cavity flow F is attenuated by an increase in channel resistance against a circumferential component of the flow due to the porous plate 455. Hence, in the region in which the porous plate 455 is disposed, the cavity flow F is attenuated.

According to the structure described above, since the porous plate 455 is disposed in the pipe 453, the channel resistance against the circumferential component of the flow in the pipe 453 is increased. Hence, the cavity flow F is attenuated in the region in which the porous plate 455 is disposed and is prevented from intruding into the pipe 453. In addition, compared to the case in which an orifice is disposed, in the case in which the porous plate 455 is disposed, the channel resistance against the circumferential component of the flow is increased more, and a swirling flow can be reliably attenuated.

## Claims

1. A pipe which is branched from a main pipe through which a high-temperature fluid flows and which is configured to be closable,
wherein dividing part for dividing a channel inside the pipe into a plurality of small channels is provided in the pipe.

2. The pipe according to Claim 1,
wherein the dividing part includes a first pipe connected to the main pipe, a second pipe separated from the first pipe, and a plurality of connection pipes connecting the first pipe and the second pipe so as to enable the fluid to flow therebetween.

3. The pipe according to Claim 1,
wherein the dividing part includes a plurality of cylindrical members provided in the pipe, each having a smaller diameter than that of the pipe, and
the plurality of cylindrical members are disposed side-by-side in a circumferential direction of the pipe.

4. The pipe according to Claim 1,
wherein the dividing part includes a porous body having a plurality of penetrating holes,
the porous body is disposed inside the pipe, and axial lines of the plurality of penetrating holes are disposed along a central axis direction of the pipe.

5. A pipe which is branched from a main pipe through which a high-temperature fluid flows and which is configured to be closable,
wherein disturbing part for disturbing a vortex flow swirling in the pipe in a circumferential direction is provided in the pipe.

6. The pipe according to Claim 5,
wherein the disturbing part includes a first spiral member twisted in one rotary direction and a second spiral member twisted in another rotary direction, and
the first spiral member and the second spiral member are disposed in the pipe.

7. The pipe according to Claim 5,
wherein the disturbing part includes a channel resistance portion increasing a channel resistance against flow in a central axis direction in the pipe.

8. The pipe according to Claim 5,
wherein the disturbing part includes a plate member extending in a central axis direction of the pipe, and
the plate member protrudes inside and outside the pipe.

9. A pipe which is branched from a main pipe through which a high-temperature fluid flows and which is configured to be closable,
wherein a cylindrical member is provided in the pipe, and
the cylindrical member is disposed in a region of the pipe where a rapid temperature change portion of the fluid is formed.

10. The pipe according to Claim 9,
wherein the cylindrical member has a concave portion or a convex portion spirally extending on the inner surface of the cylindrical member.

11. A pipe which is branched from a main pipe through which a high-temperature fluid flows and which is configured to be closable,
wherein in a region of the pipe where a rapid temperature change portion of the fluid is formed, an extendible portion which is extendible in a central axis direction of the pipe is provided.

12. The pipe according to Claim 11,
wherein the extendible portion includes an accordion portion having a concave and a convex part in the radial direction of the pipe, and
the distance between the concave and convex parts along the central axis direction of the pipe is determined in accordance with fluctuation in position where the rapid temperature change portion is formed.
